Europäisches Patentamt

European Patent Office

Office européen des brevets

(11) Veröffentlichungsnummer: **0 387 897**
**A1**

## (12) EUROPÄISCHE PATENTANMELDUNG

(21) Anmeldenummer: 90105006.2

(51) Int. Cl.⁵: **E04H 6/40, B65G 1/04**

(22) Anmeldetag: 16.03.90

(30) Priorität: 17.03.89 DE 3908858

(43) Veröffentlichungstag der Anmeldung:
**19.09.90 Patentblatt 90/38**

(84) Benannte Vertragsstaaten:
**AT BE CH DE DK ES FR GB GR IT LI LU NL SE**

(71) Anmelder: **S.A.E.A. INNOVATIONSPRODUKTE GmbH**
**Goettweiger-Strasse 53**
**D-8390 Passau(DE)**

(72) Erfinder: **Schmalzl, Ekkehard**
**Am Schlierbach 5**
**D-7860 Schopfheim(DE)**

(74) Vertreter: **Kuhnen, Wacker & Partner**
**Schneggstrasse 3-5 Postfach 1553**
**D-8050 Freising(DE)**

(54) **Park- oder Lagersystem.**

(57) Ein Park- oder Lagersystem (2), insbesondere zur Garagierung von Kraftfahrzeugen (106) weist eine Mehrzahl von Palettenträgern (110) auf, die zueinander drehbeweglich gelagert sind. Die Garagierung der einzelnen Kraftfahrzeuge (106) erfolgt hierbei mittels Paletten (102), welche von den Palettenträgern (110) mittels entsprechend ausgelegter Fördermittel (104) aufgenommen werden können.

EP 0 387 897 A1

## Park- oder Lagersystem

Die Erfindung betrifft ein Park- oder Lagersystem, nach dem Oberbegriff des Anspruches 1.

Die zur Verfügungstellung ausreichender Parkplätze stellt immer wieder ein städtebauliches Problem dar, dem bislang nur mit unzulänglichen Mitteln begegnet werden kann. So ist es allgemein bekannt, Parkhochhäuser oder Tiefgaragen bereitzustellen, die in einer Mehrzahl von vertikal übereinanderliegenden Parketagen Parkraum bieten. Derartige Parkhäuser oder Tiefgaragen haben zwar eine allgemeine Akzeptanz gefunden, weisen jedoch eine Mehrzahl von Nachteilen auf. Es sind dies unter anderem die Lärm- und Abgasbelästigung von Anrainern, die Gefahr von Karambolagen in den zumeist sehr eng ausgelegten Park- und Fahrbuchten sowie die Gefahren von Diebstählen aus abgestellten Autos und Überfällen auf Personen, die sich in den zumeist sehr unübersichtlichen und schwer zu überwachenden Parkhaus-Anlagen befinden.

Weiterhin ist es bekannt, bereits vorhandene Garagenanlagen mit entsprechenden Vorrichtungen derart nachzurüsten, daß eine höhere Stellplatzkapazität erzielt wird. So ist es beispielsweise aus der DE-PS 16 84 991 bekannt, bereits bestehende Garagenanlagen dadurch nachzurüsten, daß in die Fahrgasse zwischen zwei einander gegenüberliegenden Stellplatzreihen noch zusätzliche Stellplätze in Form von Trageplattformen für Fahrzeuge eingebracht werden, wobei die Plattformen durch einen im Boden eingelassenen Mechanismus derart verschiebbar und um einen gewissen Betrag schwenkbar sind, daß weiterhin ein ungehinderter Zugang zu den einzelnen bereits vorhandenen Stellplätzen möglich ist.

Ein ähnliches System ist aus der AT-PS 23 40 41 bekannt, bei der in der Fahrstraße zwischen einander gegenüberliegenden Garagenstellplätzen Drehplattformen zur Aufnahme jeweils eines Kraftfahrzeuges angeordnet werden. Diese Drehplattformen dienen einerseits zur Aufnahme weiterer Kraftfahrzeuge und lassen sich andererseits derart bewegen, daß eine ungehinderte Zufahrt zu den bereits vorhandenen Stellplätzen möglich ist.

Aus der DE-OS 27 17 213 ist ein Parksystem bekannt, bei dem eine Mehrzahl von einzelnen Paletten in X- und Y-Richtung verschiebbar gehalten ist, wobei die einzelnen Paletten reihen- und spaltenweise angeordnet sind, wobei weiterhin in einem Feld von beispielsweise 4 x 3 Paletten (entsprechend zwölf Stellplätzen) nur elf Paletten vorgesehen sind und durch entsprechendes laterales und transversales Verfahren einzelner Paletten in den jeweils vorhandenen Freiraum auf den Paletten abgestellte Fahrzeuge entsprechend manipuliert, d.h. auf der Stellfläche verfahren werden können.

Den Systemen gemäß der DE-PS 16 84 991 und AT-PS 23 40 41 haftet der Nachteil an, daß der mit beträchtlichem Aufwand zu erkaufende Zugewinn an weiteren Stellplätzen relativ beschränkt ist und bei dem Parksystem gemäß der DE-OS 27 17 213 muß ein ganz erheblicher technischer Aufwand in Kauf genommen werden, um die einzelnen Paletten lateral und transversal verschieben zu können, wobei das erzielbare Parksystem dennoch eine relativ geringe Umschlagsgeschwindigkeit hat.

Demgegenüber ist es Aufgabe der vorliegenden Erfindung, ein Park- oder Lagersystem nach dem Oberbegriff des Anspruches 1 derart auszubilden, daß mit vergleichsweise geringem technisch-konstruktivem Aufwand ein Park- oder Lagersystem geschaffen wird, welches ein Höchstmaß an Flexibilität und Benutzerfreundlichkeit hat.

Die Lösung dieser Aufgabe erfolgt erfindungsgemäß durch die im Anspruch 1 angegebenen Merkmale.

Vorteile und zweckmäßige Weiterbildungen der Aufgabenlösung ergeben die Merkmale der Unteransprüche.

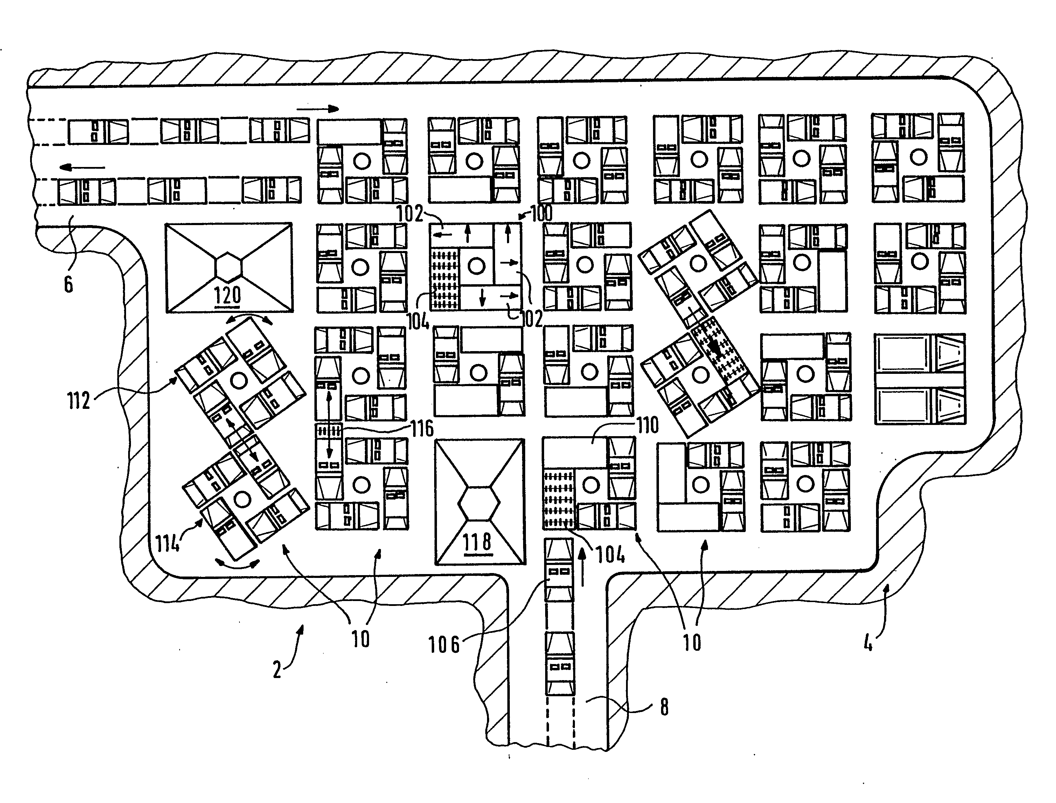

Weitere Einzelheiten, Aspekte und Vorteile der vorliegenden Erfindung ergeben sich aus der nachfolgenden Beschreibung unter Bezugnahme auf die Zeichnung.

Die einzige Figur der Zeichnung zeigt schematisch stark vereinfacht eine Draufsicht von oben auf ein erfindungsgemäßes Park- oder Lagersystem.

Die Beschreibung der vorliegenden Erfindung erfolgt beispielshaft anhand eines Parksystems zur Garagierung von Kraftfahrzeugen; andere Einsatzmöglichkeiten der vorliegenden Erfindung sind gleichermaßen denkbar, so beispielsweise zur Lagerung von Containern, Paletten mit darauf angeordneten Waren oder dergl.

In der Zeichnung dargestellt ist ein erfindungsgemäßes Parksystem 2, das gemäß der gewählten Darstellung beispielsweise in Form einer Tiefgarage vorliegt. Das hierbei umgebende Erdreich ist in der Darstellung mit dem Bezugszeichen 4 angedeutet.

Zu- und/oder Abfahrten 6 und 8 sind vorgesehen, mittels denen das Parksystem 2 erreichbar ist und über die das Parksystem 2 verlassen werden kann. Die Zu- und Abfahrten können entweder normale Fahrstraßen sein, oder aber sie können mit Rollengängen, Förderbändern oder dergl. ausgestattet werden, welche die zu garagierenden Fahrzeuge in das Parksystem 2 bringen.

Die Garagierung der Fahrzeuge erfolgt erfindungsgemäß mittels drehbar gelagerten Palettenträgern 10, die zur Aufnahme von beispielsweise vier PKWs oder zwei LKWs dienen. Die Palettenträger 10 können motorisch oder hydraulisch oder dergl. gedreht werden, wobei die Drehung entweder im Uhrzeigersinn oder gegen Uhrzeigersinn möglich ist. Ein in der Zeichnung mit 100 bezeichneter Palettenträger sei nun im folgenden näher betrachtet: Gemäß der Zeichnung ist der Palettenträger 100 zur Aufnahme von vier Kraftfahrzeugen ausgelegt. Hierzu sind auf dem Palettenträger 100 insgesamt vier Paletten 102 angeordnet, von denen in der Zeichnung drei dargestellt sind. Die Paletten 102 ruhen auf dem Palettenträger 100 unter Zwischenschaltung entsprechender Fördermittel 104, die beispielsweise in Form von Rollengängen oder dergl. vorliegen. Besonders vorteilhaft in diesem Zusammenhang ist die Verwendung eines Antriebes zur Förderung der Paletten 102, welcher in der Patentanmeldung P3908856.1 mit dem Titel "Multidirektionaler Antrieb für Rollenbahnen oder dergleichen" der gleichen Anmelderin beschrieben ist, und auf die hier insoweit vollinhaltlich Bezug genommen wird. Die Fördermittel 104 sind vorzugsweise in der Lage, die auf ihnen gelagerten Paletten 102 sowohl in X- als auch Y-Richtung zu bewegen, wie in der Figur an dem Palettenträger 100 durch die jeweiligen Pfeile dargestellt ist.

Ein beispielsweise in der Zufahrt 8 ankommendes Fahrzeug 106 wird in einem Übergabebereich, der in der Zeichnung nicht näher dargestellt ist, von dem Fahrzeuglenker dem erfindungsgemäßen Parksystem 2 überlassen, d.h., der Fahrzeuglenker verläßt das Fahrzeug in dem Übergabebereich, wonach er ggf. an einem entsprechenden Terminal Ankunftszeit, Zulassungsnummer, Nummer eines ggf. reservierten Stellplatzes oder dergl. eingibt. In dem Übergabebereich wird das Kraftfahrzeug 106 auf eine Palette 102 transferiert. Dies erfolgt entweder dadurch, daß der Lenker des PKWs sein Fahrzeug in dem Übergabebereich direkt auf eine Palette 102 abstellt, oder aber daß das Fahrzeug in dem Übergabebereich automatisch, beispielsweise roboterunterstützt auf eine Palette 102 gehoben, geschoben oder dergl. wird.

Das in der Zeichnung mit 106 bezeichnete Fahrzeug wird im Zuge seiner Garagierung auf einen Palettenträger 110 dadurch gebracht, daß die auf dem Palettenträger 110 angeordneten Fördermittel 104 derart aktiviert werden, daß die Palette 102 mit dem darauf stehenden Kraftfahrzeug 106 durch die entsprechende Förderbewegung der Fördermittel 104 auf dem Palettenträger 110 gezogen wird. Das erfindungsgemäße Parksystem ist derart ausgelegt, daß zwischen den einzelnen Palettenträgern 110 eine Übergabe der einzelnen Paletten 102 samt den darauf stehenden Fahrzeugen 106 dergestalt erfolt, daß durch die Fördermittel 104 eine Weiterförderung von beladenen Paletten 102 entweder in X- oder Y-Richtung dergestalt erfolgt, daß der durch das Parksystem 2 besetzte Platz fortlaufend von seiner der Zu- oder Abfahrt entferntesten Stelle aus sukzessive aufgefüllt wird. Wie in der Zeichnung dargestellt, sind hierbei die Palettenträger 110 erfindungsgemäß drehbar angeordnet, so daß wie in der Zeichnung beispielhaft mit dem Bezugszeichen 112 und 114 bezeichnete Palettenträger mit ihrem Umfangskanten sich derart gegenseitig annähern können, daß die einzelnen PKWs 106 bzw. die Paletten 102, auf denen die PKWs 106 abgestellt sind, von einem Palettenträger 112 auf den anderen Palettenträger 114 übertragen bzw. übergeben werden können, wobei durch die Drehausrichtung der Palettenträger 112 und 114 der zu überbrückende Abstand zwischen den beiden Palettenträgern auf ein Minimum reduziert ist. Genauso gut können leere oder mit PKWs beladene Paletten 102 zwischen den einzelnen Palettenträgern übertragen werden, ohne daß hierbei eine Ausrichtung der einzelnen Palettenträger untereinander erfolgt, indem beispielsweise in Übergaberichtung an jedem Palettenträger 100 eine ausfahrbare Übergabeplattform 116 vorgesehen ist, welche bei Bedarf ausfahrbar ist und den Abstand zwischen zwei benachbarten Palettenträgern unter Dazwischenschaltung des entsprechenden Fördermittels 104 überbrückt.

Durch eine entsprechende Übergabe der einzelnen Paletten 102 - ggf. mit darauf abgestellten PKWs - ist es somit möglich, das erfindungsgemäße Parksystem 2 sukzessive mit ankommenden PKWs aufzufüllen. Das "Auffüllen" des Parksystems 2 erfolgt hierbei vorteilhafterweise computergestützt derart, daß im Bereich der Übergabestation bereits die voraussichtliche Verweildauer des Kraftfahrzeuges in dem Parksystem eingegeben wird und, je länger die zu erwartende Verweildauer des Fahrzeuges in dem Parksystem ist, je weiter das betreffende Fahrzeug von der Zu-/Abfahrt 6 oder 8 entfernt deponiert wird. Wie bereits erwähnt, erfolgt hierbei die Übergabe des Fahrzeuges 106 bzw. der Palette 102, auf der das Fahrzeug 106 abgestellt wurde ebenfalls rechnerunterstützt zwischen den einzelnen Palettenträgern 10 bzw. 110, wobei sich diese Palettenträger ggf. untereinander durch eine entsprechende Drehbewegung ausrichten, so daß die gesamte Garagierung der entsprechenden Fahrzeuge ohne menschliches Zutun vollautomatisch und sehr platzsparend bzw. ökonomisch erfolgt. Die Belastung der Umgebung durch Abgase oder Motorengeräusch ist hierbei auf ein Minimum reduziert, so daß auch in dicht besiedelten Wohngebieten ein Betrieb des erfindungsgemäßen Park-oder Lagersystems rund um die Uhr möglich ist.

Es kann ggf. eine Überwachung der automatischen Parkanlage erfolgen, wobei diese Überwachung entweder durch Videokameras oder durch direkte visuelle Überwachung, beispielsweise von entsprechend angeordneten Überwachungskabinen 118 bzw. 120 aus erfolgt.

In einer besonders bevorzugten Ausführungsform der vorliegenden Erfindung ist vorgesehen, daß zumindest einer, vorzugsweise mehrere Palettenträger 10 nach Art einer Liftes höhenverfahrbar sind, so daß auch eine mehrgeschossige Auslegung des erfindungsgemäßen Parksystemes 2 denkbar ist. Speziell die den Zu-/Abfahrten 6 und 8 direkt benachbarten Palettenträger sollten hierbei höhenverfahrbar sein, so daß direkt im Anschluß an den entsprechenden Übergabebereich bereits eine selektive Auswahl entsprechender Stockwerke über die höhenverfahrbaren Palettenträger erfolgen kann.

## Ansprüche

1. Park- oder Lagersystem, insbesondere zur Garagierung von Kraftfahrzeugen, mit einer Mehrzahl von Stellplätzen zur jeweiligen Aufnahme von wenigstens einem Kraftfahrzeug, wobei die Stellplätze relativ zueinander bewegbar sind, dadurch gekennzeichnet,
daß die Stellplätze in Form von Paletten (102) auf drehbar gelagerten Palettenträgern (110) anordenbar sind, wobei die Palettenträger (110) Fördermittel (104) zur wechselseitigen Übergabe der Paletten (102) aufweisen.

2. Park- oder Lagersystem nach Anspruch 1, dadurch gekennzeichnet, daß die Fördermittel (104) Rollengänge sind.

3. Park- oder Lagersystem nach Anspruch 2, dadurch ge kennzeichnet, daß die Rollengänge reversierbar ausgelegt sind.

4. Park- oder Lagersystem nach Anspruch 2 oder 3, dadurch gekennzeichnet, daß die Rollengänge in X- und Y-Richtung fördern können.

5. Park- oder Lagersystem nach einem der Ansprüche 1 bis 4, dadurch gekennzeichnet, daß auf jedem Palettenträger (110) vier Paletten (102) anordenbar sind.

6. Park- oder Lagersystem nach einem der Ansprüche 1 bis 4, dadurch gekennzeichnet, daß auf jedem Palettenträger (110) zwei Paletten (102) anordenbar sind.

7. Park- oder Lagersystem nach einem der Ansprüche 1 bis 6, dadurch gekennzeichnet, daß zwischen den einzelnen Palettenträgern (110) in der jeweiligen Förderrichtung der einzelnen Paletten (102) ausfahrbare Übergabeplattformen (116) vorgesehen sind.

8. Park- oder Lagersystem nach einem der Ansprüche 1 bis 7, dadurch gekennzeichnet, daß in dem gesamten System (2) wenigstens einer der Palettenträger (110) höhenverfahrbar ist.

9. Park- oder Lagersystem nach einem der Ansprüche 1 bis 8, dadurch gekennzeichnet, daß die Drehung der einzelnen Palettenträger (110), sowie ggf. deren Höhenbewegung computergesteuert ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 771 200 (GILLIARD) * Spalte 1, Zeile 52 - Spalte 2, Zeile 24; Spalte 2, Zeile 58 - Spalte 3, Zeile 18; Figuren 1,2,6,7 * --- | 1 | E 04 H 6/40 B 65 G 1/04 |
| A,D | DE-A-2 717 213 (GRÖGER) ----- | | |

**RECHERCHIERTE SACHGEBIETE (Int. Cl.5)**

E 04 H
B 65 G

Der vorliegende Recherchenbericht wurde für alle Patentansprüche erstellt

| Recherchenort | Abschlußdatum der Recherche | Prüfer |
|---|---|---|
| DEN HAAG | 07-06-1990 | PORWOLL H.P. |